# EUROPEAN PATENT APPLICATION

(11) **EP 3 678 108 A1**
(43) Date of publication of application: **08.07.2020**
(21) Application number: 18812027.3
(22) Date of filing: 25.10.2018
(51) Int. Cl.: G08G 1/01

(54) **METHOD AND SYSTEM FOR DETERMINING WHETHER TARGET ROAD FACILITY IS PRESENT AT INTERSECTION**

(71) Applicant: Beijing Didi Infinity Technology and Development Co., Ltd., Beijing 100193 (CN)
(72) Inventor: SUN, Weili, Beijing 100193 (CN); ZHANG, Zhihao, Beijing 100193 (CN); DU, Zelong, Beijing 100193 (CN)
(74) Representative: Wang, Bo
(86) International application number: PCT/CN2018/111807
(87) International publication number: WO 2020/082284

(57) **Abstract**

The present disclosure provides a method, system, device, and storage medium for determining whether there is a target road facility at an intersection. The method may include: obtaining trajectory data related to left-turn trajectories of moving objects at a target intersection; extracting information related to feature parameters associated with the target road facility from the trajectory data; determining whether there is the target road facility at the target intersection based on the information related to the feature parameters of the target intersection. The method may determine the road facility configuration of an intersection intelligently, reducing costs of human resources and time.

## Description

### TECHNICAL FIELD

The present disclosure relates to the field of traffic management informatization, and in particular, to a determination method, system, device, and storage medium for whether there is a target road facility at an intersection.

### BACKGROUND

With the intelligent development of urban traffic, it is desirable to clearly understand a setting condition of a road facility at an intersection to realize an intelligent regulation of traffic lights. For example, whether there is a left-turn waiting area, a left-turn traffic light, or other traffic control sign at the intersection. Take the left-turn waiting area as an example, the timing setting of a traffic light may be different depending on whether there is the left-turn waiting area at the intersection or not. If there is the left-turn waiting area at the intersection, it is necessary that moving objects that go straight go first and moving objects that turn left go later. However, some intersections may have a left-turn waiting area, and some intersections may not have a left-turn waiting area, it is desirable to know in advance whether each intersection has a left-turn waiting area. Therefore, whether there is a certain road facility at an intersection may have a significant impact on the informatization of traffic management. At present, there is no intelligent method for determining whether there is a road facility at an intersection. If each intersection needs to be confirmed by manual on-site check, it will consume a lot of manpower and material resources. Thus, an accurate and intelligent method for determining whether there is a road facility at an intersection is needed.

### SUMMARY

The present disclosure provides a method, system, device, and storage medium for determining whether there is a target road facility at an intersection, and the purpose is to intelligently determine a setting condition of road facilities at the intersection, and reduce the cost of manpower and material resources.

In order to achieve the above purpose of the present disclosure, the present disclosure provides the technical solution as follows:
A method for determining whether there is a target road facility at an intersection. The method may implement on a device that includes a processor and a storage. The method may include one or more of the following operations: obtaining trajectory data related to left-turn trajectories of moving objects at a target intersection; extracting information related to feature parameters associated with the target road facility from the trajectory data; determining whether there is the target road facility at the target intersection based on the information related to the feature parameters of the target intersection. The trajectory data may be a data set that includes a plurality of pieces of information related to a plurality of points at the left-turn trajectories in a chronological order. The target road facility may include a left-turn waiting area, and the feature parameters may include a driving parameter after the moving objects enter the intersection.

In the present disclosure, the determining whether there is the target road facility at the target intersection based on the information related to the feature parameters comprises: determining judgment thresholds, a number of the judgment thresholds being the same as a number of the feature parameters, and each of the judgment thresholds being corresponding to one of the feature parameters; comparing the feature parameters with the corresponding judgment thresholds to determine whether there is the target road facility at the intersection, wherein it is determined that there is the target road facility at the intersection if the feature parameters are within ranges of the corresponding judgment thresholds.

In the present disclosure, the feature parameters may include at least one of the following: a number of stops, a stop duration, a stop distance, a delay time, an average speed of passing through the intersection, or a probability of stopping twice.

In the present disclosure, the determining the judgment thresholds may include: obtaining trajectory data related to left-turn trajectories of moving objects at a known intersection; extracting information related to the feature parameters associated with the target road facility from the trajectory data; labeling whether the known intersection includes the target road facility; and determining the judgment thresholds of the feature parameters based on the information related to the feature parameters and the labeling result of the known intersection.

In the present disclosure, the method may further include: obtaining left-turn trajectories of moving objects at the known intersection as preliminary trajectory data; extracting the preliminary trajectory data that corresponds to a flat peak period and includes the complete feature parameters as the trajectory data; the flat peak period being a period of time when a traffic flow at the intersection is stable, the period of time excluding a time when the traffic flow at the intersection is too high and too low.

In the present disclosure, the determining the judgment thresholds of the feature parameters based on the information related to the feature parameters and the labeling result of the known intersection may include: training a judgment model using the judgment thresholds based on the information related to the feature parameters and the labeling result of the known intersection; determining the judgment thresholds and the judgment model.

In the present disclosure, the determine whether there is the target road facility at the target intersection based on the information related to the feature parameters of the target intersection may include: inputting the trajectory data of the target intersection into the judgment model; outputting a judgment result that whether there is the target road facility at the target intersection or not.

In the present disclosure, the judgment model may be a decision tree model.

In the present disclosure, the method may further include: obtaining left-turn trajectories of moving objects at the target intersection as preliminary trajectory data; extracting the preliminary trajectory data that corresponds to a flat peak period and includes the complete feature parameters as the trajectory data; the flat peak period being a period of time when a traffic flow at the intersection is stable, the period of time excluding a time when the traffic flow at the intersection is too high and too low.

A system for determining whether there is a target road facility at intersections. The system may include: an obtaining module configured to obtain trajectory data related to left-turn trajectories of moving objects at a target intersection, and extract information related to feature parameters associated with the target road facility from the trajectory data; a judgment module configured to determine whether there is the target road facility at the target intersection based on the information related to the feature parameters of the target intersection. The trajectory data may be a data set that includes a plurality of pieces of information related to a plurality of points in a chronological order. The target road facility may include a left-turn waiting area, and the feature parameters may include a driving parameter after the moving objects enter the intersection.

A device for determining whether there is a target road facility at intersections, the device may include a processor and a storage for storing instructions, wherein when the instructions are executed by the processor, causing the device to perform operations corresponding to any one of the above mentioned methods.

A computer readable storage medium stores computer instructions, when a computer reads the computer instructions in the storage medium, the computer operates any one of the above mentioned methods for determining whether there is a target road facility at intersections.

Additional features will be set forth in part in the description which follows, and in part will become apparent to those skilled in the art upon examination of the following and the accompanying drawings or may be learned by production or operation of the examples. The features of the present disclosure may be realized and attained by practice or use of various aspects of the methodologies, instrumentalities and combinations set forth in the detailed examples discussed below.

### BRIEF DESCRIPTION OF DRAWINGS

The present disclosure is further described in terms of exemplary embodiments. These exemplary embodiments are described in detail with reference to the drawings. These embodiments are non-limiting exemplary embodiments, in which like reference numerals represent similar structures throughout the several views of the drawings, and wherein:
FIG.1 is a schematic diagram illustrating an exemplary road information system according to some embodiments of the present disclosure;
FIG.2 is a schematic diagram illustrating exemplary hardware components and/or software components of an exemplary computing device according to some embodiments of the present disclosure;
FIG.3 is a schematic diagram illustrating exemplary hardware components and/or software components of an exemplary mobile device according to some embodiments of the present disclosure;
FIG. 4 is a block diagram illustrating an exemplary processing engine according to some embodiments of the present disclosure;
FIG. 5-A is an explanatory diagram illustrating an intersection having a left-turn waiting area;
FIG. 5-B is an explanatory diagram illustrating an intersection without a left-turn waiting area;
FIG.6 is a block diagram illustrating another exemplary processing engine according to some embodiments of the present disclosure;
FIG.7 is an exemplary flowchart for determining whether there is a target facility at a target intersection according to some embodiments of the present disclosure;
FIG.8 is an exemplary flowchart for determining a judgment model according to some embodiments of the present disclosure;
FIG. 9 is a schematic diagram illustrating a judgment model according to some embodiments of the present disclosure;
FIG.10 is an exemplary flowchart illustrating determining whether there is a target road facility at a target intersection using a judgment model according to some embodiments of the present disclosure.

### DETAILED DESCRIPTION

In order to illustrate technical solutions related to embodiments of the present disclosure, brief introduction of the drawings referred to the description of the embodiments is provided below. Obviously, the drawings described below are only some examples or embodiments of the present disclosure. A person of ordinary skill in the art, without further creative effort, may apply the present disclosure in other scenarios according to these drawings. Unless the context clearly indicates or stated otherwise, the same reference numerals in the drawings refer to the same structure or operation
As used in the disclosure and the claims, the singular forms "a," "an," and "the" may be intended to include the plural forms as well, unless the context clearly indicates otherwise. Generally, the terms "include" and/or "comprise" specify the presence of operations and elements, but do not form an exclusive combination, the methods and devices may include other operations and elements.

Although some embodiments of the present disclosure refer to some modules of the system in various ways, however, any number of different modules may be used and operated in a client terminal and/or a server. These modules are intended to be illustrative. Different modules may be used in different aspects of the system and method.

The flowcharts used in the present disclosure illustrate operations that systems implement according to some embodiments in the present disclosure. It is to be expressly understood, the operations of the flowchart may be implemented not in order. Conversely, the operations may be implemented in inverted order, or simultaneously. Moreover, one or more other operations may be added to the flowcharts, or one or more operations may be omitted from the flowcharts.

Embodiments of the present disclosure may be applied to road traffic systems and/or mobile devices. The road traffic system may be a public road transportation system including a traffic light, a traffic camera, a traffic sign, a public road, a pedestrian, a driving and moving object such as an automatic vehicle (e.g., a small car, a bus, a large transport vehicle, an electric vehicle, a rickshaw, a travel tool, etc.) and a vehicle. The mobile device may be a mobile device equipped with a positioning system, including but not limited to a smartphone, a smart watch, a camcorder, a camera, a notebook, a tablet, a personal digital assistant (PDA), a built-in computer, a navigation, an aircraft, etc. It should be understood that the application scenarios of the system and method disclosed herein are merely some examples or embodiments. Those having ordinary skills in the art, without further creative efforts, may apply these drawings to other application scenarios.

The positioning techniques in the present disclosure may be based on a global positioning system (GPS), a global navigation satellite system (GLONASS), a compass navigation system (COMPASS), a Galileo positioning system, a quasi-zenith satellite system (QZSS), a wireless LAN (WiFi) positioning technology, or the like, or any combination thereof. One or more of the above positioning systems may be used interchangeably in the present disclosure.

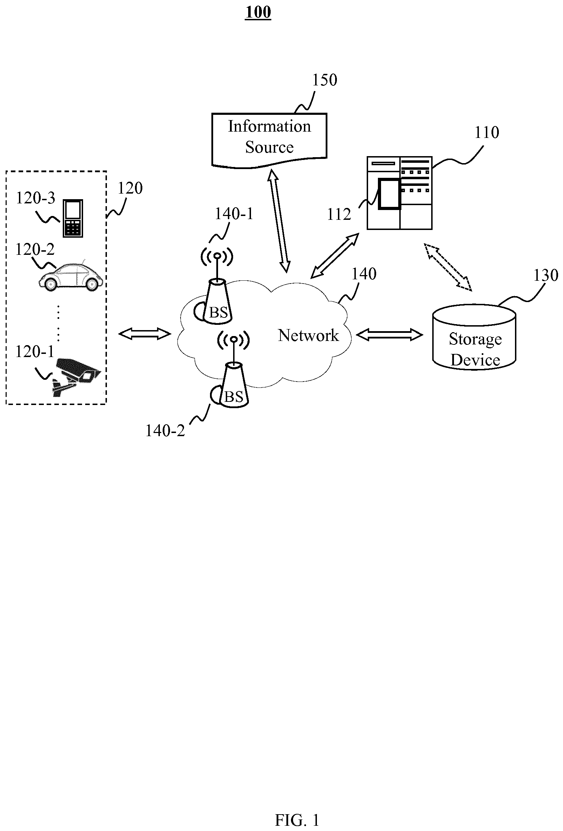

FIG.1 is a schematic diagram illustrating a road information system 100 according to some embodiments of the present disclosure. For example, the road information system 100 may be a platform that provides road information to a transportation service. The road information may include but be not limited to road type information, road route information, traffic signal configuration information, road sign information, traffic congestion status information, or the like. The road information system 100 may include a server 110, a data collection device 120, a storage device 130, a network 140, and an information source 150. The server 110 may include a processing engine 112.

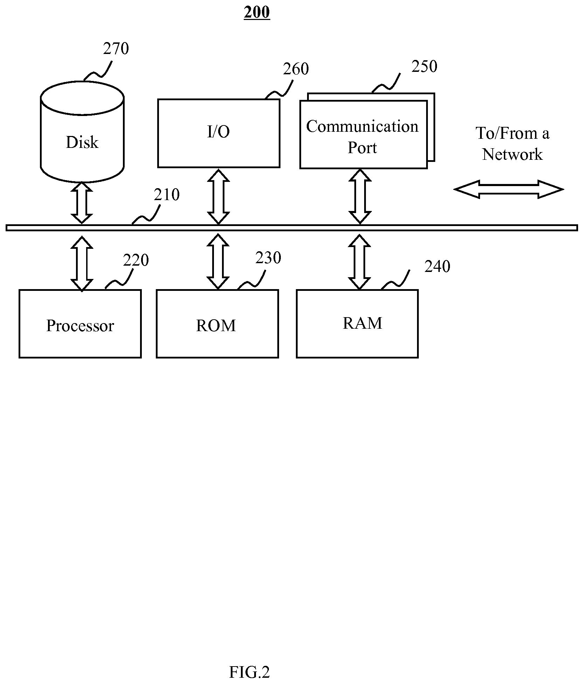

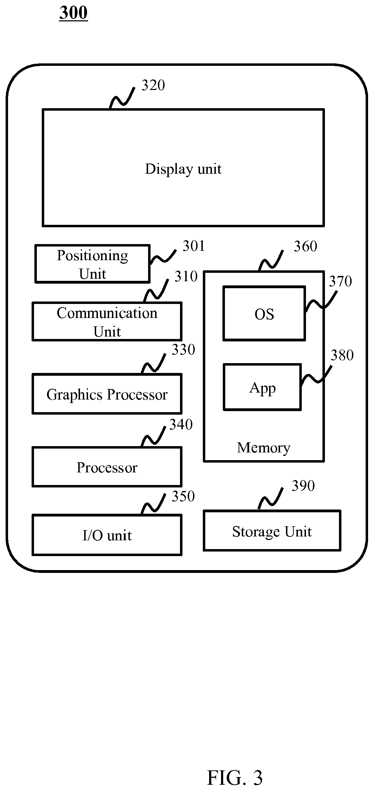

In one embodiment, in some embodiments, the server 110 may be a single server or a server group. The server group may be centralized or distributed (e.g., the server 110 may be a distributed system). In some embodiments, the server 110 may be local or remote. For example, the server 110 may access the information and/or data stored in the storage device 130 and the data collection device 120. As another example, the server 110 may be directly connected to the information and/or data of the storage device 130 and the data collection device 120. In some embodiments, the server 110 may be implemented on a cloud platform. Merely by way of example, the cloud platform may include a private cloud, a public cloud, a hybrid cloud, a community cloud, a distributed cloud, an inter-cloud, a multi-cloud, or the like, or any combination thereof. In some embodiments, the server 110 may be implemented on a computing device shown in FIG. 2 or FIG. 2 of the present disclosure. For example, the server 110 may be implemented on a computing device 200 as shown in FIG. 2 and include one or more components of the computing device 200. As another example, the server 110 may be implemented on a mobile device 300 as shown in FIG. 3 and include one or more components of the computing device 200.

In some embodiments, the server 110 may include a processing engine 112. The processing engine 112 may process information and/or data associated with road information to perform one or more functions described in the present disclosure. For example, the processing engine 112 may determine whether there is a road facility at an intersection, for example, whether there is has a left-turn waiting area, a left-turn traffic light, a variable lane, or other traffic control sign at the intersection. In some embodiments, the processing engine 112 may include one or more processing engines (e.g., single-core processing engine(s) or multi-core processor(s)). Merely by way of example, the processing engine 112 may include one or more hardware processors, such as a central processing unit (CPU), an application-specific integrated circuit (ASIC), an application-specific instruction-set processor (ASIP), a graphics processing unit (GPU), a physics processing unit (PPU), a digital signal processor (DSP), a field-programmable gate array (FPGA), a programmable logic device (PLD), a controller, a microcontroller unit, a reduced instruction-set computer (RISC), a microprocessor, or the like, or any combination thereof.

The data collection device 120 may be a video capture device or a mobile device directly equipped with a positioning system. In some embodiments, the data collection device 120 may be a camera 120-1 fixed or movable at the intersection, which captures a video of a road and moving objects driving on the road and processes the image information into digital information. In some embodiments, the data collection device 120 may also be a mobile device configured with positioning information, including but not limited to a built-in device 120-2, a handheld mobile device 120-3, or the like, or a combination thereof. In some embodiments, the handheld mobile device 120-3 may include but be not limited to a smartphone, a personal digital assistant (PDA), a tablet computer, a handheld game player, a smart glasses, a smart watch, a wearable device, a virtual reality device, a display enhancement device, or the like, or any combination thereof. In some embodiments, the built-in device 120-2 of a vehicle may include but be not limited to an on-board computer, a vehicle navigation, or the like. It may include but not limited to a small car, a bus, a large carrier vehicle, an electric vehicle, a rickshaw, and a travel tool. In some embodiments, the data collection device 120 may send the acquired road information to one or more devices of the road information system 100. For example, the data collection device 120 may send the road information to the server 110 for processing. The data collection device 120 may also send the road information to the storage device 130 for storage.

The storage device 130 may store data and/or instructions. In some embodiments, the storage device 130 may store data obtained from the data collection device 120. In some embodiments, the storage device 130 may store data and/or instructions for execution or use by the server 110, and the server 110 may perform or use the data and/or instructions to implement exemplary methods described in the present disclosure. In some embodiments, the storage device 130 may include a mass storage, a removable storage, a volatile read-write memory, a read only memory (ROM), or the like, or any combination thereof. Exemplary removable storages may include a flash disk, a floppy disk, an optical disk, a storage card, a compressed hard disk, a magnetic tape, or the like. Exemplary volatile read only memory may include a random-access memory (RAM). Exemplary RAM may include a dynamic RAM (DRAM), a double date rate synchronous dynamic RAM (DDR SDRAM), a static RAM (SRAM), a thyristor RAM (T-RAM), and a zero-capacitor RAM (Z-RAM), etc. Exemplary ROM may include a mask ROM (MROM), a programmable ROM (PROM), an erasable programmable ROM (EPROM), an electrically-erasable programmable ROM (EEPROM), a compact disk ROM (CD-ROM), and a digital versatile disk ROM, etc. In some embodiments, the storage device 130 may be implemented on a cloud platform. For example, the cloud platform may include a private cloud, a public cloud, a hybrid cloud, a community cloud, a distributed cloud, an inter-cloud, a multi-cloud, or the like, or any combination thereof

In some embodiments, the storage device 130 may connect to the network 140 to enable a communication with one or more components (e.g., the server 110, the data collection device 120, etc.) of the road information system 100. The one or more components of the road information system 100 may access the data or instructions stored in the storage device 130 via the network 140. In some embodiments, the storage device 130 may be directly connected or communicated with one or more components of the road information system 100 (e.g., the server 110, the data collection device 120, etc.). In some embodiments, the storage device 130 may be part of the server 110.

The network 140 may facilitate an exchange of information and/or data. In some embodiments, one or more components (e.g., the server 110, the storage device 130, and the data collection device 120, etc.) of the road information system 100 may send information and/or data to other components of the road information system 100 via the network 140. For example, the server 110 may obtain/receive data from the data collection device 120 via the network 140. In some embodiments, the network 140 may be any one of a wired network or a wireless network, or a combination thereof. For example, the network 140 may include a cable network, a wired network, a fiber optic network, a telecommunication network, an intranet, an Internet, a local zone network (LAN), a wide zone network (WAN), a wireless local zone network (WLAN), a metropolitan zone network (MAN), a public switched telephone, network (PSTN), a Bluetooth network, a ZigBee network, a near field communication (NFC) network, or the like, or any combination thereof. In some embodiments, the network 140 may include one or more network access points. For example, the network 140 may include a wired or a wireless network access point, such as base stations and/or internet exchange points 140-1, 140-2, through which one or more components of the road information system 100 may be connected to the network 140 to exchange data and/or information.

The information source 150 may be a source providing other information to the road information system 100. The information source 150 may be configured to provide the system with information related to road information, for example, weather conditions, traffic information, legal regulations, news, life information, life guide information, or the like. The information source 150 may exist in the form of a single central server, or a plurality of servers connected to each other via a network, or a plurality of personal devices. When the information source 150 is implemented on the plurality of personal devices, the personal devices may utilize user-generated content by, for example, uploading text, voice, images, and videos to a cloud server, then the cloud server may connect the plurality of personal device connected thereto to form the information source 150.

FIG.2 is a schematic diagram illustrating an exemplary computing device 200 according to some embodiments of the present disclosure. The server 110 and the storage device 130 may be implemented on the computing device 200. For example, the processing engine 112 may be implement on the computing device 200 and configured to implement the functions disclosed in the present disclosure.

The computing device 200 may include any component configured to implement the system described in the present disclosure. For example, the processing engine 112 may be implemented on the computing device 200 via its hardware devices, software programs, firmware, or any combination thereof. For convenience, only one computer is depicted in the figure, but the computational functions associated with the road information system 100 described in the present disclosure may be implemented by a group of similar platforms in a distributed mode to disperse the processing load of the system.

The computing device 200 may include a communication port 250 connected to a network for implementing data communication. The computing device 200 may include a processor (e.g., CPU) 220 that executes program instructions in the form of one or more processors. An exemplary computer platform may include an internal bus 210, different types of program storages and data storages including, such as a hard disk 270, a read only memory (ROM) 230, or a random access memory (RAM) 240 for storing a variety of data files processed and/or transferred by a computer. An exemplary computing device may include program instructions executed by the processor 220 stored in the ROM 230, the RAM 240, and/or other types of non-transitory storage media. The methods and/or processes of the present disclosure may be implemented in the form of program instructions. The computing device 200 also includes an input/output component 260 for supporting an input/output between the computer and other components. The computing device 200 may also receive programs and data in the present disclosure via a network communication.

To facilitate understanding, only one processor is depicted in FIG.2 as an example. However, it should be noted that the computing device 200 in the present disclosure may include a plurality of processors, and thus the operations and/or methods performed by a processor described in the present disclosure may also be jointly or independently performed by a plurality of processors. For example, if in the present disclosure, the processor of the computing device 200 performs operations 1 and 2, it should be understood that operation 1 and operation 2 can also be performed collectively or independently by two different processors of the computing device 200 (e.g., a first processor performs the operation 1, a second processor performs the operation 2, or the first and the second processors collectively perform operation 1 and operation 2).

FIG.3 is a schematic diagram illustrating an exemplary hardware and/or software of an exemplary mobile device 300 according to some embodiments of the present disclosure. The collection of trajectory data may be performed by the mobile device 300. As shown in FIG. 3, the mobile device 300 may include a positioning unit 301, a communication unit 310, a display unit 320, a graphic processor 330, a processor 340, an input/output unit 350, a memory 360, and a storage unit 390. The mobile device 300 may also include a bus or a controller. In some embodiments, a mobile operation system 370 and one or more application programs 380 may be loaded into the memory 360 from the storage unit 390 to be executed by the processor 340. In some embodiments, the applications programs 380 may receive and display information related to image processing or other information of the processing engine 112. The input/output unit 350 may achieve an interaction between data and the road information system 100 and provide the interactive related information to other components of the road information system 100, for example, the server 110, via the network 140.

To implement various modules, units, and their functionalities described in the present disclosure, computer hardware platforms may be used as the hardware platform(s) for one or more of the elements described herein. A computer with user interface elements may be used to implement a personal computer (PC) or any other type of work station or terminal device. A computer may also act as a system if appropriately programmed.

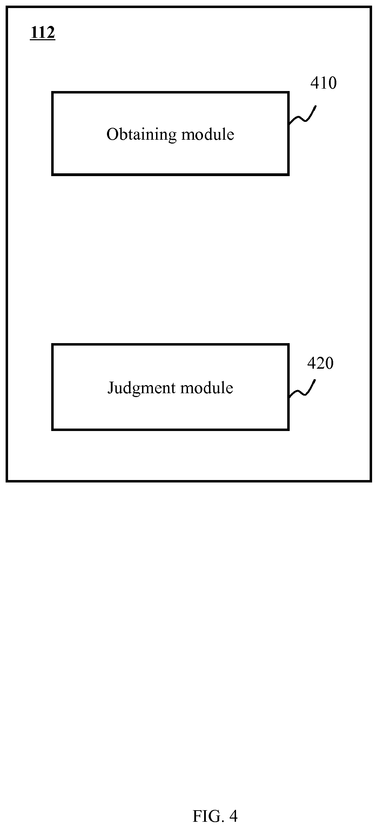

FIG. 4 is a block diagram illustrating an exemplary processing engine 112 according to some embodiments of the present disclosure. As shown, the processing engine 112 may include an obtaining module 410 and a judgment module 420.

The obtaining module 410 may obtain data. In some embodiments, the obtaining module 410 may obtain data from the data collection device 120, the storage device 130, the network 140, the information source 150, or any one or more of the devices or components in the road information system 100 capable of storing data disclosed the present disclosure. The obtained data may include one or a combination of driving trajectory information, moving object information, environmental information, traffic congestion status information, an algorithm, a model, or the like. In some embodiments, the obtaining module 410 may obtain trajectory data of a moving object at an intersection. In one embodiment, the moving object may be a movable object that can be driven on a road, including but not limited to a vehicle, a bicycle, a carriage, a rickshaw, a movable robot, or the like. In one embodiment, the trajectory data of the moving object may obtained by processing and transforming image information captured by a fixed or movable video acquisition device into digital information. In some embodiments, the trajectory data may be collected by a mobile device directly equipped with positioning information. In some embodiments, the trajectory data may be a trajectory data set that includes a plurality of pieces of information related to a plurality of points at the left-turn trajectories in a chronological order, including all information related to the driving of the moving object. For example, a driving route, a driving time, speed information, position information, or the like.

In some embodiments, the obtaining module 410 may extract information related to feature parameter(s) associated with a target road facility from the trajectory data. In some embodiments, the target road facility may include but be not limited to a traffic light, a traffic sign (including a prohibition sign, a travel mode indication sign, etc.), a left-turn waiting area at an intersection, a variable lane, or other road traffic facilities, or any combination thereof. In some embodiments, the target road facility may be the left-turn waiting area. In some embodiments, the feature parameter(s) may include a driving parameter when the moving object enters the intersection. In some embodiments, the feature parameter(s) may include information for distinguishing between an intersection having a left-turn waiting area and an intersection without a left-turn waiting area. For example, the feature parameter(s) may include a number of stops, a stop duration, a stop distance, a time for the moving object passing through the intersection, a delay time, an average speed of passing through the intersection, or a probability of stopping twice or more than twice, or the like.

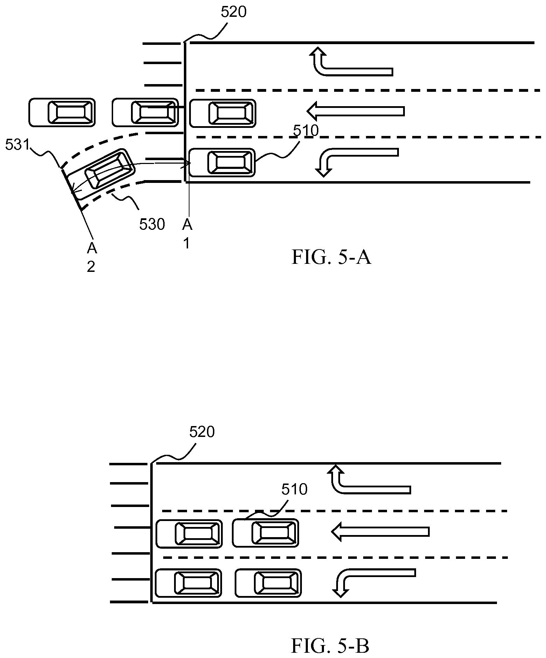

FIG. 5-A is an explanatory diagram illustrating an intersection having a left-turn waiting area. FIG. 5-B is an explanatory diagram illustrating the intersection without the left-turn waiting area. As shown in FIG. 5-A, when the intersection has a left-turn waiting area 530, the moving object 510 usually stops twice when waiting for a green left-turn light. The first stop occurs at a park position behind a stop line 520 at the beginning of a red light, and the second stop occurs at a parking position for waiting for the green light after the a light for going straight turns green and the moving subject 510 enters a left-turn waiting area 530. For example, when the left-turn light turns red, the current position A1 may be the position for the first stop of the moving object 510 if the moving object 510 stops at the parking line 520. When the light for going straight turns green, the moving object 510 moves forward to the left-turn waiting area 530, and stops at the stop line 531 of the left-turn waiting area 530. The second stop occurs when the moving object 510 waits for the left-turn green light, and the position A2 may a position for the second stop of the moving object 510. The distance between the two stops of the moving object 510 may refer to a distance from A1 to A2, i.e., a length of the left-turn waiting area 530, wherein the length may refer to a linear distance from A1 to A2 or a route distance from A1 to A2. The stop duration of the moving object 510 at A1 may be roughly equal to the remaining time of the red light for going straight, and the stop duration of the moving object 510 at A2 may be roughly equal to the time of the green light for going straight. As shown in FIG. 5-B, when the intersection has no left-turn waiting area, turning left may be the same as going straight, which usually has only one stop and the stop duration may be equal to the remaining time of the red light. Also, the time and the average speed passing through the intersection having the left-turn waiting area may be different from that of the intersection without the left-turn waiting area because of the two stops at the intersection having the left-turn waiting area. Therefore, trajectories of the moving object 510 at the intersection having the left-turn waiting area and the intersection without the left-turn waiting area may be different, and the corresponding information related to the feature parameter(s) may be different.

In one embodiment, the feature parameters may include at least one of a number of stops, the stop duration, a stop distance, a delay time, an average speed passing through the target intersection, or a probability of stopping twice. In some embodiments, the intersection may be a road with a certain length from a certain place of a left-turn lane to an entrance of a next lane, wherein the certain place of the left-turn lane may be a position on the left-turn lane having a certain distance to the front parking line in the driving direction. In other words, the length of the intersection may be a sum of the distance from the certain position at the left-turn lane to the parking line at the intersection and the length between the parking line and the entrance of the next lane. For example, the intersection may be a section of road extending from a point on the left-turn lane to the entrance of the next lane whose length is 300 meters. In some embodiments, the moving object may be considered as having one stop if the speeds corresponding to at least two consecutive points in the trajectory data are both less than a preset value. For example, it is considered that one stop occurs if the speeds corresponding to three consecutive points are both less than 0.67 m/s. In some embodiments, the stop duration may refer to the duration of one stop. For example, the stop duration may be the remaining time of the red light for going straight, or the time of the green light for going straight. The stop distance may refer a moving distance of the moving object between the two stops, wherein the distance may be a linear distance or a route distance. For example, the stop distance may refer to a linear length or a route length of the left-turn waiting area. As disclosed above, if the moving object has more than two stops at an intersection and the stop distance is the length of the left-turn waiting area, the intersection may be considered as having a left-turn waiting area. The delay time may refer to a difference between the time for the moving object actually passes through the intersection and the time that the moving object needs to pass through the intersection without stops. If the delay time is within a certain value range, the intersection may be considered as having a left-turn waiting area. In one embodiment, a ratio of the delay time to a signal period may be compared to a value range, and the intersection may be considered as having a left-turn waiting area if the ratio is within the value range. The signal period may be a change period of a traffic light, for example, the signal period may be an interval between the current green light for going straight and a next green light for going straight. In some embodiments, the time needed to pass through the intersection without stops may be obtained by the following method: obtaining trajectory data related to left-turn trajectories at the intersection within a period; extracting trajectory data without stops; and determining an average time needed for passing through the intersection based on the extracted trajectory data. In some embodiments, the time needed for passing through the intersection without stops may be updated, for example, updated regularly every month. In one embodiment, the average speed passing through the intersection may be an average speed of the moving object passing through the intersection. If the average speed passing through the intersection is within a certain value range, the intersection may be considered as having a left-turn waiting area. The probability of stopping twice may refer to a ratio of the number of trajectories whose number of stops are equal to or greater than two to a total number of trajectories of moving objects. If the probability of stopping twice is greater than a certain value, the intersection may be considered as having a left-turn waiting area. It should be understood that in some cases, even if the intersection has a left-turn waiting area, it may be possible that there is no stop or only one stop to pass through the intersection. However, when the intersection has a left-turn waiting area, the probability of stopping twice may be significantly higher than that without the left-turn waiting area. Therefore, the determination result of whether the intersection has a left-turn waiting area may be more accurate if the probability of stopping twice is used as a feature parameters in the determination. In some embodiments, the feature parameters may be a statistical value. For example, a statistical number of stops, an average value and a variance of stop durations, an average value and a variance of stop distances, an average value and a variance of delay times, an average value and a variance of average speeds passing through the intersection. Utilizing the statistical data such as the average values and variances as the feature parameter(s) may reduce an impact of an individual feature parameter on the result and improve the judgment accuracy.

In some embodiments, the obtaining module 410 may further obtain left-turn trajectories of the moving objects at the intersection as preliminary trajectory data, and filter the preliminary trajectory data. In some embodiments, the preliminary trajectory data in a flat peak period and includes complete feature parameter(s) may be selected as the trajectory data. In some embodiments, the flat peak period may refer a period of time when a traffic flow in the intersection is stable excluding a time when the traffic flow in the intersection is too high and too low. For example, in a typical city, the flat peak period is usually between 10 a.m. and 16 p.m. It should be understood that if the intersection is in the peak period of congestion, the number of stops and the stop durations of the moving objects usually are greater than those in the flat peak period, and the driving speeds and the time for passing through the intersection may be greatly varied, which may result in a pool data regularity and influence the judgment accuracy. On the other hand, an abnormity of the data collection device 220 may cause an abnormity of the trajectory data, such as an incontinuity and an interrupt, which may have an inference and result in an inaccurate judgment. Therefore, it is possible to improve the stability of data and the accuracy of the judgment result by filtering the trajectory data. In some embodiments, the obtaining module 410 may obtain the trajectory data in a period of time to increase the number of samples, wherein the period of time may be one month, one quarter, one year, etc. For example, the obtaining module 410 may obtain the trajectory data of a target intersection within one month, extract information related to feature parameter(s) of the trajectory data, obtain statistical value(s) of the feature parameter(s), and determine whether the intersection has a left-turn waiting area according to the statistical value(s) of the feature parameter(s). The more the trajectory data is obtained, the more accurate the judgment result is. In one embodiment, after the judgment result is obtained according to the trajectory data of the target intersection, the trajectory data of the target intersection may be used as the trajectory data of a known intersection, and the judgment result may be used as an indication of whether there is a left-turn waiting area, the trajectory data and the labeling result of the know intersection may be used as a training sample to determine whether other target intersections have a left-turn waiting area or used in data update of the judgment model. In one embodiment, after the judgment result is determined according to the trajectory data of the target intersection, the processing engine 112 may save the trajectory data of the target intersection and the judgment result in the road information system 100 for using as sample data in training. For example, the processing engine 112 may store the trajectory data and the judgment result of the target intersection as trajectory data and a labeling result of a known intersection in the storage device 130.

The judgment module 420 may be configured to determine whether there is a target road facility at the target intersection based on the feature parameter(s) of the target intersection. For example, the feature parameter(s) related to a left-turn waiting area may be extracted according to the trajectory data related to left-turn trajectories of the moving objects to determine whether the intersection has a left-turn waiting area. In some embodiments, the judgment module 420 may also compare the feature parameter(s) with the corresponding judgment threshold(s) to determine whether the intersection has the target road facility. If the feature parameter(s) are within the corresponding judgment threshold(s), it may be determined that there is the target road facility at the intersection. If the feature parameter(s) are not within the corresponding judgment threshold(s), it may be determined that there is no target road facility at the intersection. For example, if the number of stops of moving objects is significantly greater than or equal to twice in the trajectory data related to left-turn trajectories of an intersection, it may be determined that the intersection has a left-turn waiting area. In some embodiments, the number of the judgment threshold(s) may be equal to the number of the feature parameter(s), and each of the judgment threshold(s) may correspond to one of the feature parameter(s). For example, if feature parameter(s) include of the number of stops, the corresponding judgment threshold may be equal to or greater than twice. If the feature parameter(s) include the stop duration, the corresponding judgment threshold may be two durations, one of which may be the remaining time of a red light of going straight and another of which may be the duration of a green light of going straight. In some embodiments, the judgment module 420 may also input the trajectory data related to left-turn trajectories of moving objects at the target intersection into a judgment model, and the constructed judgment model may output a judgment result indicating whether there is the target road facility. For example, to determine whether there is a left-turn waiting area at an intersection, trajectory data of the intersection in a certain period may be inputted into the judgment model, and the judgment model may determine and output a result indicating whether the intersection has a left-turn waiting area. In one embodiment, the judgment model may be a judgment model trained in advance by machine learning.

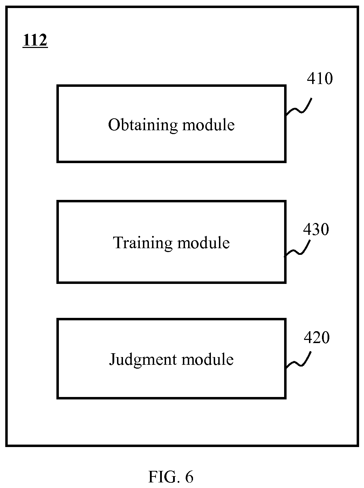

In one embodiment, as shown in FIG. 6, the processing engine 112 may also include a training module 430. The training module 430 may be configured to determine the judgment threshold(s). In some embodiments, the training module 430 may also obtain left-turn trajectories of moving objects at a known intersection, extract information related to the feature parameter(s) associated with the target road facility from the trajectory data, and label that whether there is the target road facility at the known intersection, and determine the judgment threshold(s) of the feature parameter(s) based on the information related to the feature parameter(s) and the labelling result of the known intersection. In some embodiments, a number of known intersections may be selected as samples to obtain trajectory data and labeling results. For example, 100 intersections may be selected as known intersections, trajectory data related to left-turn trajectories of the 100 intersections may be obtained, and information related to the feature parameter(s) may be extracted, and the 100 intersections may be labelled with whether there are left-turn waiting areas. In some embodiments, the labeling of whether there is the target road facility at a known intersection may be performed based on a manually on-site survey, a traffic camera, an electronic map, or other methods for collecting the result of whether there is the target road facility at the known intersection. In some embodiments, the trajectory data and the labeling result of a known intersection may be obtained from the road information system 100. For example, the trajectory data and the labeling results of the known intersections may be known data previously stored and transformed from trajectory data and the corresponding judgment result of target intersections. In some embodiments, the training module 430 may determine the corresponding judgment threshold(s) according to the obtained information related to the feature parameter(s) and the labeled results by sorting, statistics, or other calculation methods. In some embodiments, the judgment threshold(s) may also be an empirical value manually determined according to actual requirements. For example, the judgment threshold of the number of stops may be reasonably inferred according to the actual situation. As mentioned above, it is very likely that the intersection has no left-turn waiting area when the number of stops is less than twice, and it is very likely that the intersection has a left-turn waiting area when the number of stops are equal to or more than twice. Therefore, it can be determined manually that the judgment threshold of "the number of stops" is "≥2". In some embodiments, the training module 430 may also be configured to train the judgment model based on the information related to the feature parameter(s) of known intersections and the labeling results to determine the judgment threshold(s) and the judgment model. For example, trajectory data related to left-turn trajectories of 100 intersections may be obtained, and information related to the feature parameter(s) related to a left-turn waiting area may be extracted. The 100 intersections may be labelled with whether there are left-turn waiting areas, and the information related to feature parameters and the labeling results of the 100 intersections may be used in machine learning as training samples to determine the judgment threshold(s) and the judgment model of the information related to the feature parameter(s). In some embodiments, the judgment model may be a decision tree model, including but not limited to a classification and regression tree (CART), iterative dichotomiser 3 (ID3), a C4.5 algorithm, a random forest (Random Forest), a chisquared automatic interaction detection (CHAID), a multivariate adaptive regression splines (MARS), and a gradient boosting machine (GBM), or any combination thereof. In some embodiments, during the training process, the model may be verified using a verification set, and the model parameters may be adjusted according to the verification result such that the model reaches an optimal state. The data in the verification set may be independently and identically distributed as the training data of the judgment model, and have no intersection with the training data.

It should be understood that the system and the modules thereof shown in FIG. 4 and FIG.5 may be implemented in a various ways. For example, in some embodiments, the system and the modules thereof may be implemented as hardware, software or a combination of software and hardware. The hardware may be implement by a specific logic, and the software may be stored in a storage and executed by an appropriate instruction execution system (e.g., a microprocessor, a dedicated design hardware, etc.). It will be understood by those skilled in the art that the above method and system may be implemented as computer-executable instructions and/or be embedded in control codes of a processor. For example, the control codes may be provided by a storage medium such as a disk, a CD or a DVD-ROM, a programmable storage device such as a read-only storage (e.g., firmware), or a data carrier such as an optical or electric signal carrier. The system and the modules thereof of the present disclosure may be implemented by hardware circuits, such as very large scale integrated circuits or gate arrays, semiconductors such as logic chips or transistors, programmable hardware devices such as field-programmable gate arrays or programmable logic devices, etc. The system and the modules thereof may be implemented by software that can be executed by various processors. The system and the modules thereof may also be implemented by a combination (e.g., firmware) of the hardware circuits and the software.

It should be noted that the above description is provided for the purposes of illustration and not intended to limit the scope of the present disclosure. For persons having ordinary skills in the art, various variations and modifications may be conducted under the teaching of the present disclosure. However, those variations and modifications may not depart the spirit and scope of this disclosure. For example, the obtaining module 410 and the training module 430 may be integrated into one module, which has a data acquisition function and a module training function. However, such changes and modifications do not depart from the scope of the present disclosure.

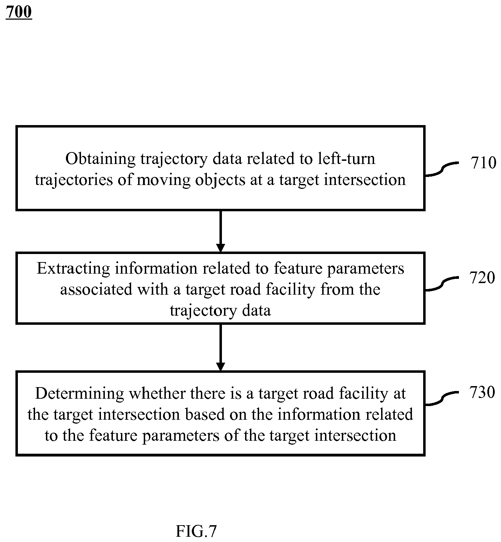

FIG.7 is an exemplary flow diagram illustrating determining whether there is a target road facility at an intersection according to some embodiments of the present disclosure. In some embodiments, the process 700 may be performed by a processing logic which may include hardware (e.g., a circuitry, a dedicated logic, a programmable logic, a microcode, etc.), software (instructions running on a processing device to perform a hardware emulation) etc. or any combination thereof. One or more operations in the process 700 for determining whether there is a target road facility at the intersection as shown in FIG. 7 may be implemented by the road information system 100 as shown in FIG.1. For example, the process 700 may be stored in the storage device 130 in the form of instructions, and invoked and/or executed by the processing engine 112 (e.g., the processor 220 of the computing device 200 as shown in FIG. 2, the central processor 340 of the mobile device 300 as shown in FIG.3).

In 710, trajectory data related to left-turn trajectories of moving objects at a target intersection may be obtained. Operation 710 may be performed by the obtaining module 410. The trajectory data related to the trajectories may be obtained by processing and converting image information obtained by a fixed or movable video acquisition device into digital information. In some embodiments, the trajectory data related to the trajectories may be collected by a mobile device directly equipped with positioning information. In some embodiments, the trajectory data may be a data set that includes a plurality of pieces of information related to a plurality of points at the left-turn trajectories in a chronological order, including all information related to the driving of the moving objects. For example, a driving line, a driving time, speed information, position information, or the like. The moving objects may be movable objects that may be driven on the road, including but not limited to a bicycle, a carriage, a rickshaw, a movable robot, or the like. In one embodiment, the trajectory data may be obtained by a handheld mobile device 120-3 equipped with a positioning unit. In some embodiments, the handheld mobile device 120-3 may include but be not limited to a smartphone, a personal digital assistant (PDA), a tablet computer, a handheld game player, a smart glasses, a smart watch, a wearable device, a virtual reality, a display enhancement device, or the like, or any combination thereof.

In 720, information related to feature parameter(s) associated with the target road facility may be extracted from the trajectory data. In some embodiments, operation 720 may be performed by the obtaining module 410. In some embodiments, the target road facility may include but be not limited to a traffic light, a traffic sign (including a prohibition sign, a travel mode indication sign, etc.), a left-turn waiting area at an intersection, a variable lane, or other road traffic facilities, or any combination thereof. In some embodiments, the target road facility may be a left-turn waiting area. In some embodiments, the feature parameter(s) may include a driving parameter when a moving object enters the intersection. The feature parameter(s) may include at least one of a number of stops, a stop duration, a stop distance, a time for the moving object passing through the intersection, a delay time, an average speed passing through the intersection, or a probability of stopping twice or more than twice. The intersection may be a road with a certain length from a certain place of a left-turn lane to an entrance of a next lane, wherein the certain place of the left-turn lane may be a position on the left-turn lane that has a certain distance to a front parking line in the driving direction. In other words, the length of the intersection may be a sum of the distance from the certain position at the left-turn lane to the parking line at the intersection and the length between the parking line and the entrance of the next lane. For example, the intersection may be a section of road extending from a point on the left-turn lane to the entrance of the next lane whose length is 300 meters. In some embodiments, the moving object may be considered as having one stop if the speeds corresponding to at least two consecutive points in the trajectory data are both less than a preset value. For example, it is considered that one stop occurs if the speeds corresponding to three consecutive points are both less than 0.67 m/s. In some embodiments, the stop duration may refer to the duration of one stop. In some embodiments, the stop duration may be the remaining time of a red light for going straight, or the time of a green light for going straight. The stop distance may refer to a moving distance of a moving object between two stops, wherein the distance may be a linear distance or a route distance. For example, the stop distance may be a length of the left-turn waiting area. The delay time may refer to a difference between the time for the moving object actually passes through the intersection and the time that the moving object needs to pass through the intersection without stops. In some embodiments, the time needed to pass through the intersection without stops may be obtained by the following method: obtaining trajectory data related to left-turn trajectories at the intersection within a period; extracting trajectory data without stops; and determining an average time needed for passing through the intersection based on the extracted trajectory data. In some embodiments, the time needed for passing through the intersection without stops may be updated, for example, updated regularly every month. The average speed of a moving object passing through the intersection may be an average speed of the moving objects passing through the intersection. The probability of stopping twice may refer to a ratio of the number of trajectories whose number of stops are equal to or greater than two to a total number of trajectories of the moving objects. In some embodiments, the feature parameter(s) may be statistical value(s). For example, a statistical number of stops, an average value and a variance of the stop durations, an average value and a variance of stop distances, an average value and a variance of delay times, an average value and a variance of the average speeds passing through the intersection, or the like.

In 730, a determination as to whether there is the target road facility at the target intersection may be determined based on the information related to feature parameter(s) of the moving objects at the target intersection. Operation 730 may be performed by the judgment module 420. In some embodiments, a determination as to whether the target intersection has a left-turn waiting area may be determined based on the information related to the feature parameter(s) of the target intersection. In some embodiments, judgment threshold(s) may be determined firstly, and the feature parameter(s) may then be compared with the corresponding judgment threshold(s) to determine whether there is the target road facility at the target intersection. If the feature parameter(s) are within the corresponding judgment threshold(s), it may be determined that there is the target road facility at the intersection. If the feature parameter(s) are not within the corresponding judgment thresholds, it may be determined that there is no target road facility at the intersection. For example, if the feature parameter(s) include the probability of stopping twice. It is determined that the probability of stopping twice in the trajectory data is between 15% and 50% when the intersection has a left-turn waiting area. The probability of stopping twice in the trajectory data is smaller than 5% if there is no left-turn waiting area in the intersection. Therefore, it may be determined that the intersection has no left-turn waiting area when the probability of stopping twice in the trajectory data is 3%, and the intersection has a left-turn waiting area when the probability of stopping twice in trajectory data is 30%.

In some embodiments, the number of the judgment threshold(s) may be equal to the number of the feature parameter(s) when there are more than one feature parameters, and each of the judgment threshold(s) may correspond to one of the feature parameters. For example, the corresponding judgment threshold may be equal to or greater than twice when the feature parameters include the number of stops. The corresponding judgment threshold may be two durations when the feature parameters include the stop duration, one of which may be the remaining time of a red light of going straight and another of which may be the duration of a green light of going straight. The corresponding judgment threshold may be the length of a left-turn waiting area when the feature parameters include the distance of stops. The judgment threshold may be greater than 15% when the feature parameters include the probability of stopping twice. In some embodiments, if there is more than one feature parameters, the feature parameters may be sorted to determine a comparison order. For example, a comparison may first be performed based on the number of stops, and a further comparison may be performed to compare the durations of two stops with two thresholds, respectively, if the number of stops is equal to or greater than two. As another example, a comparison may first be performed based on the probability of stopping twice. The intersection may be considered as having no left-turn waiting area if the probability of stopping twice is 10%. A further comparison may be performed to determine whether the durations of stops are equal to the two thresholds, respectively, if the probability of stopping twice is 75% which is greater than the threshold of 15%.

It should be noted that the above description is provided for the purposes of illustration and not intended to limit the scope of the present disclosure. For persons having ordinary skills in the art, various variations and modifications may be conducted under the teaching of the present disclosure. However, those variations and modifications may not depart the spirit and scope of this disclosure.

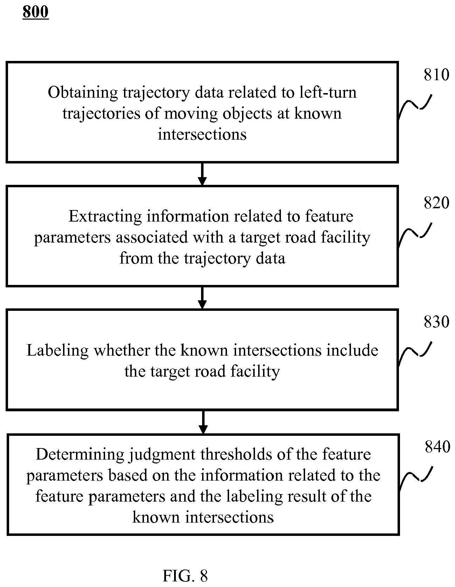

FIG.8 is an exemplary flowchart illustrating determining judgment threshold(s) and a judgment model according to some embodiments of the present disclosure. In some embodiments, the process 800 may be performed by a processing logic which may include hardware (e.g., a circuitry, a dedicated logic, a programmable logic, a microcode, etc.), software (instructions running on a processing device to perform a hardware emulation) etc. or any combination thereof. One or more operations in the process 800 for determining a judgment model for determining whether there is a target road facility at an intersection as shown in FIG. 8 may be implemented by the road information system 100 as shown in FIG.1. For example, the process 800 may be stored in the storage device 130 in the form of instructions, and invoked and/or executed by the processing engine 112 (e.g., the processor 220 of the computing device 200 as shown in FIG. 2, the central processor 340 of the mobile device 300 as shown in FIG.3).

In 810, trajectory data related to left-turn trajectories of moving objects at known intersections may be obtained. Operation 810 may be performed by the training module 430. In some embodiments, a number of known intersections may be selected as samples to obtain trajectory data and labeling results. For example, 100 intersections may be selected as known intersections, trajectory data related to left-turn trajectories of the 100 intersections may be obtained. In some embodiments, the obtaining module 410 may obtain trajectory data related to left-turn trajectories in a period of time, wherein the period of time may be one month, one quarter, one year, etc. In some embodiments, left-turn trajectories of moving objects at the target intersection may be obtained as preliminary trajectory data, and the preliminary trajectory data may be filtered. In some embodiments, the preliminary trajectory data in a flat peak period and includes complete feature parameter(s) may be selected as the trajectory data. In some embodiments, the flat peak period may be a period of time when a traffic flow in the intersection is stable excluding a time when the traffic flow in the intersection is too high and too low. For example, in a typical city, the flat peak period is usually between 10 a.m. and 16 p.m. It should be understood that if the intersection is in the peak period of congestion, the numbers of stops and the stop durations of the moving objects usually are greater than those in the flat peak period, and the driving speeds and the time for passing through the intersection may be greatly varied, which may result in a pool data regularity and influence the judgment accuracy. On the other hand, an abnormity of the data collection device 220 may cause an abnormity of the trajectory data, such as an incontinuity and an interrupt, which may have an inference on judgment and result in an inaccurate judgment. Therefore, it is possible to improve the stability of data and the accuracy of the judgment result by filtering the trajectory data.

In 820, information related to the feature parameter(s) associated with the target road facility may be extracted from the trajectory data. Operation 820 may be performed by the training module 430. In some embodiments, the target road facility may be a left-turn waiting area. In some embodiments, the feature parameter(s) may be statistical value(s). For example, a statistical number of stops, an average value and a variance of stop durations, an average value and a variance of stop distances, an average value and a variance of delay times, an average value and a variance of average speeds passing through the intersection, or the like.

In 830, the known intersections may be labelled with whether there is the target road facility at the known intersections or not. Operation 830 may be performed by the training module 430. In some embodiments, the labeling of whether there is the target road facility at the known intersections may be performed based on a manually on-site survey, a traffic camera, an electronic map, or other methods for collecting the result of whether there is the target road facility at the known intersections. For example, the known intersections may be labelled with whether there is a left-turn waiting area at the known intersections or not based on scenery information in the electronic map.

In 840, the judgment model and the judgment threshold(s) may be trained based on the information related to the feature parameter(s) and the labeling results of the known intersections. Operation 840 may be performed by the training module 430. In some embodiments, a number of known intersections may be selected as training samples to obtain the trajectory data and the labeling results. For example, 100 intersections may be selected as known intersections, trajectory data related to left-turn trajectories at 100 intersections may be obtained. Information related to feature parameter(s) may be extracted, and the 100 intersections may be labelled with whether there is a left-turn waiting area at the intersections or not. The information related to the feature parameters and labeling the results of the 100 intersections may be used in machine learning as training samples to determine the judgment threshold(s) and the judgment model of the information related to the feature parameter(s). In some embodiments, the judgment model may be a decision tree model, including but not limited to a classification and regression tree (CART), iterative dichotomiser 3 (ID3), a C4.5 algorithm, a random forest (Random Forest), a chisquared automatic interaction detection (CHAID), a multivariate adaptive regression splines (MARS), and a gradient boosting machine (GBM), or any combination thereof. In some embodiments, the model may be verified using a verification set, and the model parameters may be adjusted according to the verification result such that the model reaches an optimal state. The data in the verification set may be independently and identically distributed as the training data of the judgment model, and have no intersection with the training data. For example, trajectory data of 200 intersections may be selected as sample data, in which the trajectory data of 100 intersections may be used as the training samples for model building and the trajectory data of the remaining 100 intersections may be used as sample data for verification. The sample data for verification may be inputted to the trained judgment model, and the output results may be compared with the actual labeling results to evaluate the accuracy of the judgment model. In some embodiments, the corresponding judgment threshold(s) may be determined according to the obtained feature parameter(s) and the labeled results by sorting, statistics, or other calculation methods. In some embodiments, the judgment threshold(s) may also be an empirical value manually determined according to actual requirements. For example, the judgment threshold of the number of stops may be reasonably inferred according to the actual situation. As mentioned above, it is very likely that the intersection has no left-turn waiting area when the number of stops is less than twice, and it is very likely that the intersection has a left-turn waiting area when the number of stops are equal to or more than twice. Therefore, it can be determined manually that the judgment threshold of "the number of stops" is "≥2".

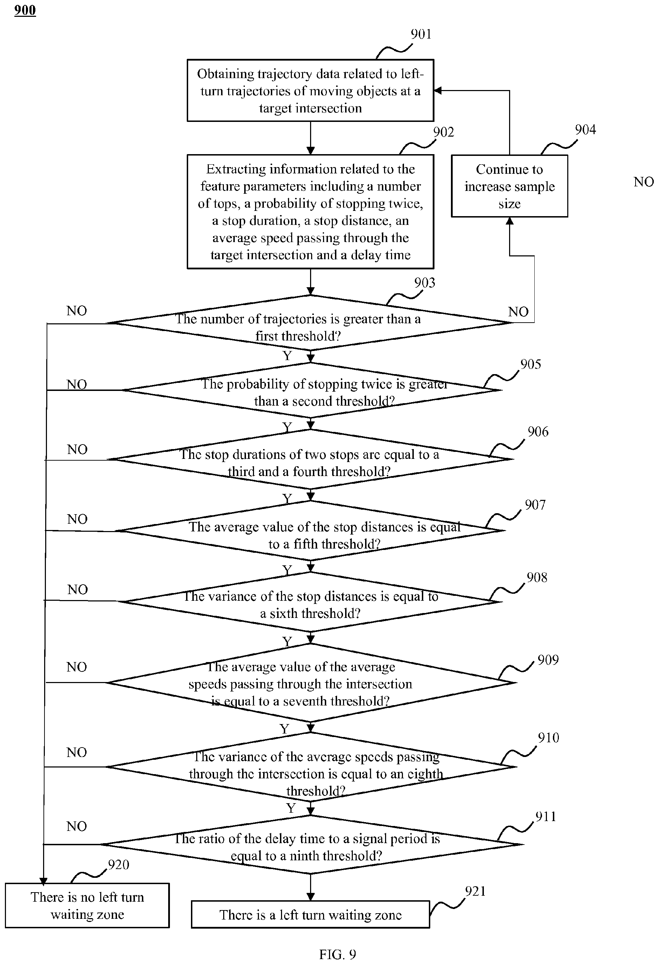

In some embodiments, FIG. 9 illustrates an exemplary algorithm flowchart of determining whether there is a left-turn waiting area at an intersection according to a decision tree model. In some embodiments, in operation 901, trajectory data related to left-turn trajectories of moving objects at a target intersection may be obtained. Operation 901 may be performed by the obtaining module 410. In some embodiments, the left-turn trajectory data may be collected by a mobile device directly equipped with positioning information. In some embodiments, the left-turn trajectory data may be left-turn trajectory data within a period stored in the storage device. In some embodiments, the moving object may be a driving vehicle on a road, a vehicle positioning device, or other handheld mobile device with a positioning unit. In operation 902, information related to feature parameter(s), such as a number of trajectories, a probability of stopping twice, a stop duration, a stop distance, an average speed passing through the intersection, and a delay time may be extracted from the trajectory data. Operation 902 may be performed by the obtaining module 410. In some embodiments, the feature parameter(s) may be statistical value(s). For example, a statistical number of stops, an average value and a variance of stop durations, an average value and a variance of stop distances, an average value and a variance of delay times, an average value and a variance of average speeds passing through the intersection. As shown in FIG. 9, the selected feature parameter(s) may include the number of the trajectories, the probability of stopping twice, the stop duration, the average value and the variance of stop distances, the average value and the variance of the speeds of passing through the intersection, and the delay time. In operation 903, a determination as to whether the number of trajectories is greater than a first threshold may be made. Operation 903 may be performed by the judgment module 420. In some embodiments, the judgment thresholds corresponding to the feature parameters (for example, the first threshold, a second threshold,... a ninth threshold) may be determined by model training. In some embodiments, the judgment thresholds may be set manually. For example, the first threshold may be set as 100 manually, and the process may continue if the number of trajectories is greater than 100. Otherwise, the collection of left-turn trajectory data of the target intersection may continue to increase the number of samples (such as operation 904). In operation 905, a determination as to whether the probability of stopping twice is greater than the second threshold may be made. Operation 905 may be performed by the judgment module 420. In some embodiments, the second threshold may be obtained by model training. In some embodiments, if the probability of stops twice is greater than the second threshold, the process may continue, and a result that "there is no left-turn waiting area" may be outputted (operation 920) if the probability of stopping twice is not greater than the second threshold. In operation 906, a determination as to whether the stop durations are equal to the third threshold and the fourth threshold may be made. Operation 906 may be performed by the judgment module 420.In some embodiments, the third threshold and the fourth threshold may be obtained by training. In some embodiments, the third threshold may be a remaining time of a red light for going straight. In some embodiments, the fourth threshold may be a time of a green light for going straight. As mentioned above (as shown in FIG. 5-A), if the intersection has a left-turn waiting area, it may be more likely that a moving object stops twice at the intersection. The duration of the first stop is about the remaining time of the red light for going straight, and the duration of the second stop is about the time of the green light for going straight. In some embodiments, if there are two stops in the trajectories and the durations of the stops are equal to the third threshold and the fourth threshold, respectively, the determination process may continue. In some embodiments, if there are two stops in the trajectories but the stop durations are not equal to the third threshold or the fourth threshold, a result "there is no left-turn waiting area" may be outputted (operation 920). For example, the stop durations may not conform to the rule of the left-turn waiting area if the two stops of the moving objects are caused by congestion or other unexpected events, so the intersection cannot be considered as having a left-turn waiting area even if there are two stops in the trajectories In operation 907, a determination as to whether the average value of stop distances is equal to the fifth threshold may be made. Operation 907 may be performed by the judgment module 420. In some embodiments, the fifth threshold may be obtained by training. In some embodiments, the fifth threshold may be the length of the left-turn waiting area. In some embodiments, the length of the left-turn waiting area may refer to a linear length of the left-turn waiting area. In some embodiments, the length of the left-turn waiting area may be an actual trajectory length of the left-turn waiting area. As mentioned above, the distance between the two stops of a moving object at an intersection may be about the length of the left-turn waiting area if the intersection has the left-turn waiting area. In some embodiments, if the average value of stop distances is equal to the fifth threshold, the determination process may continue. In some embodiments, if the average value of the stop distances is not equal to the fifth threshold, the result "there is no left-turn waiting area" may be outputted (operation 920). In operation 908, a determination as to whether the variance of the stop distances is equal to the sixth threshold may be made. Operation 908 may be performed by the judgment module 420. In some embodiments, the sixth threshold may be obtained by training. In some embodiments, if the variance of the stop distances is equal to the sixth threshold, the determination process may continue. In some embodiments, if the variance of the stop distances is not equal to the sixth threshold, the result "there is no left-turn waiting area" may be outputted (operation 920). In operation 909, a determination as to whether an average value of the average speeds passing through the intersection is equal to a seventh threshold. Operation 909 may be performed by the judgment module 420. In some embodiments, the seventh threshold may be obtained by training. As mentioned above, the moving objects at an intersection having a left-turn waiting area may have a high probability of stopping twice, and the average speeds passing through the intersection may be different from that of an intersection without a left-turn waiting area. In some embodiments, if the average of the average speeds for passing through the intersection is equal to the seventh threshold, the determination process may continue. In some embodiments, if the average value of the average speeds for passing through the intersection is not equal to the seventh threshold, the result "there is no left-turn waiting area" may be outputted (operation 920). In operation 910, a determination as whether a variance of the average speeds passing through the intersection is equal to the eighth threshold may be made. Operation 910 may be performed by the judgment module 420. In some embodiments, the eighth threshold may be obtained by training. In some embodiments, if the variance of the average speeds passing through the intersection is equal to the seventh threshold, the determination process may continue. In some embodiments, if the variance of the average speeds passing through the intersection is not equal to the seventh threshold, the result "there is no left-turn waiting area" may be outputted (operation 920). In operation 911, a determination as to whether a ratio of the delay time to a signal period is equal to the ninth threshold may be made. Operation 911 may be performed by the judgment module 420. In some embodiments, the ninth threshold may be obtained by training. In some embodiments, the delay time may refer a difference between the time for the moving object actually passes through the intersection and the time that the moving object needs to pass through the intersection without stops. The signal period may be an interval between the current green light for going straight and a next green light for going straight. In some embodiments, if the ratio of the delay time to the signal period is equal to the ninth threshold, a result that "there is a left-turn waiting area" may be outputted (operation 921). In some embodiments, if the ratio of the delay time to the signal period is not equal to the ninth threshold, the result "there is no left-turn waiting area" may be outputted (operation 920).

It should be noted that the above description is provided for the purposes of illustration and not intended to limit the scope of the present disclosure. For persons having ordinary skills in the art, various variations and modifications may be conducted under the teaching of the present disclosure. However, those variations and modifications may not depart the spirit and scope of this disclosure.

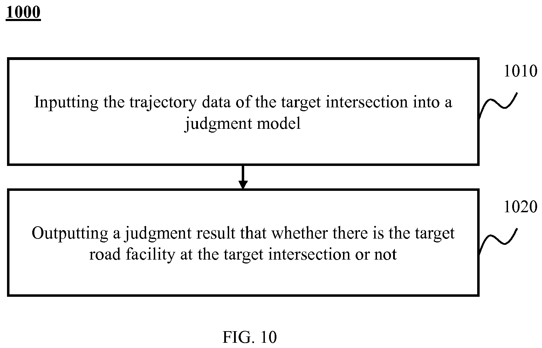

FIG. 10 is an exemplary flow diagram illustrating determining whether there is a target road facility at an intersection according to some embodiments of the present disclosure. In some embodiments, the process 1000 may be performed by a processing logic which may include hardware (e.g., a circuitry, a dedicated logic, a programmable logic, a microcode, etc.), software (instructions running on a processing device to perform a hardware emulation) etc. or any combination thereof. One or more operations in the process 1000 for determining whether there is the target road facility at the intersection as shown in FIG. 10 may be implemented by the road information system 100 as shown in FIG.1. For example, the process 1000 may be stored in the storage device 130 in the form of instructions, and invoked and/or executed by the processing engine 112 (e.g., the processor 220 of the computing device 200 as shown in FIG. 2, the central processor 340 of the mobile device 300 as shown in FIG.3).

In 1010, trajectory data related to a target intersection may be inputted into a judgment model. Operation 1010 may be performed by the judgment module 420. In some embodiments, the trajectory data of the target intersection may be trajectory data of the target intersection within a period. The period may be one month, one quarter, one year, etc. In some embodiments, trajectories at the intersection may be obtained as preliminary trajectory data, and the preliminary trajectory data that corresponds to a flat peak period and includes complete feature parameter(s) may be selected as the trajectory data, in order to improve the stability of data and the accuracy of the judgment result. In some embodiments, the judgment module 430 may access data stored in the storage device 230 via the network 140 and obtain archive data in the road information system 200 based on location information of the target intersection to obtain the trajectory data of the target intersection. Alternatively, left-turn trajectories of moving objects at the target intersection may be obtained as the preliminary trajectory data, and the preliminary trajectory data may be filtered. In some embodiments, the preliminary trajectory data in a flat peak period and includes complete feature parameter(s) may be selected as the trajectory data. In some embodiments, the flat peak period may be a period of time when a traffic flow in the intersection is stable excluding a time when the traffic flow in the intersection is too high and too low. For example, in a typical city, the flat peak period is usually between 10 a.m. and 16 p.m.

In 1020, a judgment result that whether the target intersection has the target road facility or not may be outputted. Operation 1020 may be performed by the judgment module 420. In one embodiment, the judgment result may be represented by a number "0" or "1". For example, "1" may represent that intersection has the target road facility, and "0" may represent that the intersection does not have no the target road facility. The judgment module 420 may output "1" if the judgment result is that there is a left-turn waiting area, the judgment module 420 may output "0" if the judgment result is that there is no left-turn waiting area.

It should be noted that the above description is provided for the purposes of illustration and not intended to limit the scope of the present disclosure. For persons having ordinary skills in the art, various variations and modifications may be conducted under the teaching of the present disclosure. However, those variations and modifications may not depart the spirit and scope of this disclosure.

The beneficial effects of the embodiments in the present disclosure include but are not limited to: (1) the road facility configuration of an intersection may be determined accurately and intelligently, reducing costs of human resources and time; (2) the present disclosure provides feature parameters for an accurate detection of a left-turn waiting area, which may improve an accuracy of a judgment model; (3) the present disclosure provides a judgment model configured to determine whether there is a left-turn waiting area accurately. It should be noted that different embodiments may have different beneficial effects, and different embodiments may have one or a combination of the beneficial effects mentioned above.

It should be noted that the above description is provided for the purposes of illustration and not intended to limit the scope of the present disclosure. For persons having ordinary skills in the art, various variations and modifications may be conducted under the teaching of the present disclosure. However, those variations and modifications may not depart the spirit and scope of this disclosure.

The present disclosure and/or some other examples have been described in the above. According to descriptions above, various alterations may be achieved. The topic of the present disclosure may be achieved in various forms and embodiments, and the present disclosure may be further used in a variety of application programs. All applications, modifications, and alterations required to be protected in the claims may be within the protection scope of the present disclosure.

Moreover, certain terminology has been used to describe embodiments of the present disclosure. For example, the terms "one embodiment," "an embodiment," and/or "some embodiments" average value that a particular feature, structure, or characteristic described in connection with the embodiment is included in at least one embodiment of the present disclosure. Therefore, it is emphasized and should be appreciated that two or more references to "an embodiment" or "one embodiment" or "an alternative embodiment" in various parts of this specification are not necessarily all referring to the same embodiment. In addition, some of the features, structures, or characteristics of one or more embodiments of the present disclosure may be combined as appropriate.

It may be understood to those skilled in the art that various alterations and improvements may be achieved according to some embodiments of the present disclosure. For example, the various components of the system described above may be implemented entirely hardware, but can also be implemented by software solutions, for example, by installing the system on a server. Additionally, the location information disclosed herein may be provided by a firmware, a combination of the firmware and a software, a combination of the firmware and a hardware, or a combination of the firmware, the hardware, and the software.

Some or all of the software may sometimes communicate via a network, e.g. an internet or other communication networks. This kind of communication may load a software from a computer device or a processor to another. For example, loading from a management server or a host computer of the road information system to a hardware platform of a computer environment, or other computer environment that implements a system, or a system having similar function as providing information needed to predict an order sharing rate. Therefore, another media may be used to establish a physical connection among local devices, such as a light wave, an electric wave, and an electromagnetic wave may be transmitted by cables, optical cables, or air. A physical medium used to carry waves, such as a cable, a wireless connection, an optical cable, or the like, may also be considered as a medium for hosting software. Herein, unless the tangible "storage" medium is particularly stated, other terminologies representing the "readable media" of a computer or a machine may represent a medium involved by the processor when executing any instruction.

Computer program code for carrying out operations for aspects of the present disclosure may be written in any combination of one or more programming languages, including an object oriented programming language such as Java, Scala, Smalltalk, Eiffel, JADE, Emerald, C++, C#, VB. NET, Python, or the like, conventional procedural programming languages, such as the "C" programming language, Visual Basic, Fortran 2003, Perl, COBOL 2002, PHP, ABAP, dynamic programming languages such as Python, Ruby and Groovy, or other programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local zone network (LAN) or a wide zone network (WAN), or the connection may be made to an external computer (for example, through the Internet using an Internet Service Provider) or in a cloud computing environment or offered as a service such as a Software as a Service (SaaS).

Furthermore, the recited order of processing elements or sequences, or the use of numbers, letters, or other designations therefore, is not intended to limit the claimed processes and methods to any order except as may be specified in the claims. Although the above disclosure discusses through various examples what is currently considered to be a variety of useful embodiments of the disclosure, it is to be understood that such detail is solely for that purpose, and that the appended claims are not limited to the disclosed embodiments, but, on the contrary, are intended to cover modifications and equivalent arrangements that are within the spirit and scope of the disclosed embodiments. For example, although the implementation of various components described above may be embodied in a hardware device, it may also be implemented as a software only solution, e.g., an installation on an existing server or mobile device.

Similarly, it should be appreciated that in the foregoing description of embodiments of the present disclosure, various features are sometimes grouped together in a single embodiment, FIG., or description thereof for the purpose of streamlining the disclosure aiding in the understanding of one or more of the various embodiments. However, such disclosure of the method does not average value that the present disclosure object requires more features than the features mentioned in the claims. Rather, claim subject matter lie in less than all features of a single rich disclosure.

In some embodiments, the numbers expressing quantities or properties used to describe and claim certain embodiments of the application are to be understood as being modified in some instances by the term "about," "approximate," or "substantially." Unless otherwise stated, "about," "approximate," or "substantially" may indicate ±20% variation of the value it describes. Accordingly, in some embodiments, the numerical parameters set forth in the description and attached claims are approximations that may vary depending upon the desired properties sought to be obtained by a particular embodiment. In some embodiments, the numerical parameters should be construed in light of the number of reported significant digits and by applying ordinary rounding techniques. Notwithstanding that the numerical ranges and parameters setting forth the broad scope of some embodiments of the application are approximations, the numerical values set forth in the specific examples are reported as precisely as practicable.

Each patent, patent application, patent application publication and other materials cited herein, such as articles, books, instructions, publications, documents, articles, etc., are hereby incorporated by reference in their entirety. Application history documents that are inconsistent or conflicting with the contents of the present application are excluded, and documents (currently or later attached to the present application) that limit the widest range of the scope of the present application are also excluded. It is to be noted that if the description, definition, and/or terminology used in the appended application of the present application is inconsistent or conflicting with the contents described in this application, the description, definition, and/or terminology may be subject to the present application.

At last, it should be understood that the embodiments described in the present application are merely illustrative of the principles of the embodiments of the present application. Other modifications may also be within the scope of the present application. Other modifications that may be employed may be within the scope of the application. Thus, by way of example, but not of limitation, alternative configurations of the embodiments of the application may be utilized according to the teachings herein. Accordingly, embodiments of the present application are not limited to the embodiments that are expressly introduced and described herein.

## Claims

1. A method for determining whether there is a target road facility at intersections, including:
obtaining trajectory data related to left-turn trajectories of moving objects at a target intersection;
extracting information related to feature parameters associated with the target road facility from the trajectory data;
determining whether there is the target road facility at the target intersection based on the information related to the feature parameters of the target intersection,
the trajectory data being a data set that includes a plurality of pieces of information related to a plurality of points at the left-turn trajectories in a chronological order;
the target road facility including a left-turn waiting area; and
the feature parameters including a driving parameter after the moving objects enter the intersection.

2. The method of claim 1, wherein determining whether there is the target road facility at the target intersection based on the information related to the feature parameters comprises:
determining judgment thresholds, a number of the judgment thresholds being the same as a number of the feature parameters, and each of the judgment thresholds being corresponding to one of the feature parameters; and
comparing the feature parameters with the corresponding judgment thresholds to determine whether there is the target road facility at the intersection,
wherein it is determined that there is the target road facility at the intersection if the feature parameters are within ranges of the corresponding judgment thresholds.

3. The method of claim 1, wherein the feature parameters comprise at least one of the following:
a number of stops, a stop duration, a stop distance, a delay time, an average speed of passing through the intersection, or a probability of stopping twice;
wherein for the number of stops, a moving object is considered as having one stop if speeds corresponding to at least two consecutive points are less than a preset value in the trajectory data;
the stop duration refers to a duration of one stop;
the stop distance refers to a moving distance of the moving object between the at least two stops;
the delay time refers to a difference between an actual time for the moving object passes through the intersection and a time that the moving object needs to pass through the intersection without stops;
the average speed of passing through the intersection refers to an average speed of the moving object passing through the intersection; and
the probability of stopping twice is a ratio of a number of trajectories whose number of stops are equal to or greater than two to a total number of trajectories.

4. The method of claim 2, wherein determining the judgment thresholds comprises:
obtaining trajectory data related to left-turn trajectories of moving objects at a known intersection;
extracting information related to the feature parameters associated with the target road facility from the trajectory data;
labeling whether the known intersection includes the target road facility; and
determining the judgment thresholds of the feature parameters based on the information related to the feature parameters and the labeling result of the known intersection.

5. The method of claim 4, wherein the method further comprises:
obtaining left-turn trajectories of moving objects at the known intersection as preliminary trajectory data; and
extracting the preliminary trajectory data that corresponds to a flat peak period and includes the complete feature parameters as the trajectory data;
the flat peak period being a period of time when a traffic flow at the intersection is stable, the period of time excluding a time when the traffic flow at the intersection is too high and too low.

6. The method of claim 4, wherein determining the judgment thresholds of the feature parameters based on the information related to the feature parameters and the labeling result of the known intersection comprises:
training a judgment model using the judgment thresholds based on the information related to the feature parameters and the labeling result of the known intersection; and
determining the judgment thresholds and the judgment model.

7. The method of claim 6, wherein determine whether there is the target road facility at the target intersection based on the information related to the feature parameters of the target intersection comprises:
inputting the trajectory data of the target intersection into the judgment model; and
outputting a judgment result that whether there is the target road facility at the target intersection or not.

8. The method of claim 6, wherein the judgment model is a decision tree model.

9. The method of claim 1, wherein the method further comprises:
obtaining left-turn trajectories of moving objects at the target intersection as preliminary trajectory data; and
extracting the preliminary trajectory data that corresponds to a flat peak period and includes the complete feature parameters as the trajectory data;
the flat peak period being a period of time when a traffic flow at the intersection is stable, the period of time excluding a time when the traffic flow at the intersection is too high and too low.

10. A system for determining whether there is a target road facility at intersections, including:
an obtaining module configured to obtain trajectory data related to left-turn trajectories of moving objects at a target intersection, and extract information related to feature parameters associated with the target road facility from the trajectory data; and
a judgment module configured to determine whether there is the target road facility at the target intersection based on the information related to the feature parameters of the target intersection;
the trajectory data being a data set that includes a plurality of pieces of information related to a plurality of points at the left-turn trajectories in a chronological order;
the target road facility including a left-turn waiting area; and
the feature parameters including a driving parameter after the moving objects enter the intersection.

11. The system of claim 10, wherein the system further includes a training module configured to determine judgment thresholds, and
the judgment module is further configured to compare the feature parameters with the corresponding judgment thresholds to determine whether there is the target road facility at the target intersection, wherein it is determined that there is the target road facility at the target intersection if the feature parameters are within ranges of the corresponding judgment thresholds.

12. The system of claim 11, wherein the training module is further configured to:
obtain the trajectory data related to left-turn trajectories of moving objects at a known intersection;
extract information related to feature parameters associated with the target road facility from the trajectory data;
label whether the known intersection includes the target road facility; and
determine the judgment thresholds of the feature parameters based on the information related to the feature parameters and the labeling result of the known intersection.

13. The system of claim 12, wherein the training model is further configured to:
obtain left-turn trajectories of moving objects at the known intersection as preliminary trajectory data; and
extract the preliminary trajectory data that corresponds to a flat peak period and includes the complete feature parameters as the trajectory data;
the flat peak period being a period of time when a traffic flow at the intersection is stable, the period of time excluding a time when the traffic flow at the intersection is too high and too low.

14. The system of claim 12, wherein the training module is configured to:
train a judgment model using the judgment thresholds based on the information related to the feature parameters and the labeling result;
determine the judgment thresholds and the judgment model.

15. The system of claim 14, wherein the judgment module is further configured to:
input the trajectory data of the target intersection into the judgment model;
output a judgment result that whether there is the target road facility at the target intersection or not.

16. The system of claim 14, wherein the judgment model is the decision tree model.

17. The system of claim 10, wherein the obtaining module is further configured to:
obtaining left-turn trajectories of moving objects at the target intersection as preliminary trajectory data; and
extracting the preliminary trajectory data that corresponds to a flat peak period and includes the complete feature parameters as the trajectory data;
the flat peak period being a period of time when a traffic flow at the intersection is stable, the period of time excluding a time when the traffic flow at the intersection is too high and too low.

18. The system of claim 10, the feature parameters comprise at least one of the following:
a number of stops, a stop duration, a stop distance, a delay time, an average speed of passing through the target intersection, or a probability of stopping twice;
wherein for the number of stops, a moving object is considered as having one stop if speeds corresponding to at least two consecutive points are less than a preset value in the trajectory data;
the stop duration refers to a duration of one stop;
the stop distance refers to a moving distance of the moving object between the at least two stops;
the delay time refers to a difference between an actual time for the moving object passes through the intersection and a time that the moving object needs to pass through the intersection without stops;
the average speed of passing through the intersection refers to an average speed of the moving object passing through the intersection; and
the probability of stopping twice is a ratio of a number of trajectories whose number of stops are equal to or greater than two to a total number of trajectories.

19. A device for determining whether there is a target road facility at intersections, the device includes a processor and a storage for storing instructions, wherein when the instructions are executed by the processor, causing the device to perform operations corresponding to a method of any one of claims 1 to 9.

20. A computer readable storage medium, wherein the storage medium stores computer instructions, when a computer reads the computer instructions in the storage medium, the computer operates a method of any one of claims 1 to 9.
